# FASCICULE DE BREVET EUROPEEN

(11) **EP 1 332 641 B1**
(45) Date de publication et mention de la délivrance du brevet: **19.06.2013**
(21) Numéro de dépôt: 01994040.2
(22) Date de dépôt: 09.11.2001
(51) Int. Cl.: H04W 48/18, H04W 4/24

(54) **PROCEDE DE RECHERCHE ET DETERMINATION D'UN RESEAU DE RADIOCOMMUNICATIONS**
VERFAHREN ZUM DURCHSUCHEN UND BESTIMMEN EINES FUNKKOMMUNIKATIONSNETZWERKES
METHOD FOR SEARCHING AND DETERMINING A RADIOCOMMUNICATION NETWORK

(30) Priorité: 10.11.2000 FR 0014445
(43) Date de publication de la demande: 06.08.2003
(73) Titulaire: TRANSATEL Société anonyme, 95017 Paris (FR)
(72) Inventeur: SALOMON, Bertrand, F-75116 Paris (FR); BONIFAY, Jacques, F-92100 Boulogne (FR); DURAND, Romain, F-75008 Paris (FR)
(74) Mandataire: Wagret, Frédéric
(86) Numéro de dépôt international: PCT/FR2001/003488
(87) Numéro de publication internationale: WO 2002/039776

(56) Documents cités:
- WO-A-98/20698
- WO-A-99/16267
- WO-A-99/45723

## Description

La présente invention concerne le domaine de la radiotéléphonie mobile, et plus précisément un procédé ainsi qu'un dispositif de recherche et de détermination d'un réseau de radiocommunications auquel est apte à se connecter une station mobile.

On entend par station mobile, un terminal de radiocommunication auquel est associé un module permettant d'identifier et d'authentifier l'utilisateur de la station mobile auprès d'un opérateur de radiocommunication.

Dans le cas, par exemple, du standard de radiocommunications connu sous le nom de GSM (Global System for Mobile communications), ledit module d'identification et d'authentification est une carte à puce appelée carte SIM.

Pour accéder aux services de radiocommunications, l'utilisateur de la station mobile souscrit un abonnement auprès d'un opérateur possédant un réseau de radiocommunications couvrant une certain zone géographique. Grâce aux opérateurs dits « virtuels », l'utilisateur a également la possibilité de souscrire plusieurs abonnements auprès de différents opérateurs, chacun possédant son propre réseau. Ces réseaux pour lesquels l'utilisateur est titulaire d'un abonnement sont appelés réseaux d'origine ou de base, ou encore réseaux nominaux.

Dans le cas où l'utitisateur se trouve dans une zone géographique non couverte par son ou ses réseaux d'origine, il a la possibilité d'utiliser un autre réseau, appelé réseau visité ou réseau d'accueil, auquel la station mobile sera connectée.

Ainsi, ladite station mobile est rattachée pour son abonnement à l'un des réseaux d'origine mais se trouve connectée pour son fonctionnement au réseau d'accueil.

Cette procédure, appelée itinérance, permet ainsi à l'utilisateur de la station mobile d'émettre ou recevoir des données (voix, messages courts...) quelle que soit la zone géographique où il se trouve, pour autant que cette zone soit couverte par au moins un réseau d'accueil.

Dans le cas où différents réseaux offrent une couverture radio de la zone géographique où il se trouve, l'utilisateur a la possibilité de choisir son réseau d'accueil.

Les différents réseaux, lorsqu'ils sont réseaux d'accueil en itinérance, proposent des tarifs de communication très différents les uns des autres, notamment en fonction du réseau d'origine auquel est rattachée la station mobile.

En outre, ces différents réseaux d'accueil n'offrent pas tous les mêmes services. En effet, certains possèdent des infrastructures aptes à leur permettre d'offrir certains services tels que la transmission de données par paquets (connue sous le sigle anglais de GPRS) que d'autres réseaux d'accueil ne peuvent assurer.

La demande PCT WO97/44974 divulgue un procédé destiné à sélectionner un réseau d'accueil pour une station mobile selon la localisation géographique de ladite station mobile ou selon certains paramètres, par une détection des réseaux basée sur l'utilisation de satellites et non sur le rattachement de la station mobile à un réseau d'origine. La station mobile reçoit une liste de réseaux disponibles et une sélection est effectuée.

La demande PCT WO98/20698 divulgue un procédé de connexion d'une station mobile à différents réseaux, le choix du réseau étant effectué selon les tarifs pratiqués par les différents réseaux, le procédé utilisant la technique de l'itinérance.

Cependant, avec les procédés de connexion connus, l'utilisateur n'a pas aisément accès à la liste des différents réseaux d'accueil aptes à lui permettre de connecter sa station mobile selon l'endroit où il se trouve. En outre, l'utilisateur d'une station mobile qui souhaite, quelle que soit sa position géographique, se connecter au réseau d'accueil offrant les tarifs les plus bas, doit se renseigner auprès de tous les opérateurs gérant ces réseaux d'accueil pour connaître leurs tarifs en mode d'itinérance.

De même, un utilisateur intéressé par la transmission de données par paquet doit, à chacun de ces déplacements, consulter les différents opérateurs assurant une couverture de la zone où il se rend afin de savoir s'ils assurent un service de transmission de données par paquet.

Ces démarches entraînent pour l'utilisateur de la station mobile un grand nombre de recherches fastidieuses, d'autant plus que les différents coûts de communication en itinérance, ou encore la disponibilité des services, ne sont pas des informations aisément accessibles.

Dans ce contexte, la présente invention a pour but de palier les inconvénients de l'art antérieur en proposant un procédé de recherche et de détermination d'un réseau de radiocommunication auquel est apte à se connecter une station mobile, permettant, sans effort, de répondre au mieux aux critères fixés par l'utilisateur de ladite station mobile, et ce quelle que soit la position géographique dudit utilisateur.

Le procédé de l'invention est défini selon la revendication 1.

Avantageusement, le procédé selon l'invention prévoit en outre une étape de connexion automatique de la station mobile à l'un des réseaux de la liste de réseaux d'accueil préférentiels.

Selon une variante de réalisation, l'utilisateur choisit lui-même, parmi la liste de réseaux d'accueil préférentiels, le réseau auquel il souhaite connecter la station mobile.

Les différents critères prédéfinis sont, par exemple, des préférences tarifaires et / ou des préférences de disponibilités de services que l'utilisateur peut définir lui-même, lesdits critères résidant dans une zone mémoire des moyens de traitement.

Selon différentes formes de réalisation, l'envoi d'informations de localisation par la station mobile aux moyens de traitement est opéré périodiquement, à chaque mise en service de la station mobile et / ou à chaque changement de localisation de la dite station mobile, ou encore par l'utilisateur lui-même.

L'invention concerne également un dispositif de recherche et de détermination d'un réseau de radiocommunications d'accueil auquel est apte à se connecter une station mobile d'un utilisateur, ladite station mobile étant apte à être rattachée à au moins un réseau d'origine, le dit dispositif comportant :
- des moyens de traitement apte à analyser des informations de localisation provenant de la station mobile et à déterminer, en fonction des informations de localisation reçues et de critères prédéfinis, une liste de réseaux d'accueil préférentiels répondant aux dits critères prédéfinis ;
- des moyens d'envoi, à la station mobile, de la liste de réseaux d'accueil préférentiels répondant aux dits critères prédéfinis.

De préférence, les moyens de traitement comprennent un ordinateur relié à une base de-données comprenant les différents critères prédéfinis.

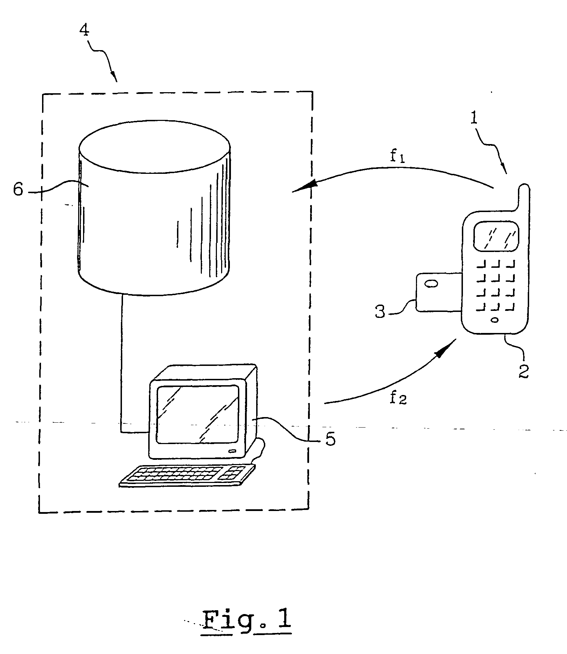

L'invention sera mieux comprise à la lumière de la description qui suit se rapportant à un exemple de réalisation illustratif mais en aucun cas limitatif, en référence à la figure 1 annexée, qui est une vue schématique illustrant le procédé selon l'invention.

La figure 1 représente schématiquement les différents éléments intervenant au cours du procédé selon l'invention.

La station mobile 1 est composée d'un terminal de radiocommunication 2, de type connu, dans lequel est inséré un module d'identification tel qu'une carte à puce 3.

Comme évoqué précédemment, la dite carte à puce 3 est, dans le standard GSM, appelée carte SIM 3.

De manière connue, la carte SIM 3 contient toutes les données concernant le titulaire de l'abonnement au service de radiocommunications, et notamment les processus d'identification et d'authentification ainsi que différentes informations relatives à l'abonnement.

Dans ùn premier temps, le procédé selon l'invention est appliqué à une station mobile 1 dont la carte SIM 3 contient des données relatives à un seul abonnement, définissant un seul réseau d'origine appartenant à un opérateur.

L'invention met également en oeuvre des moyens de traitement fixes et distincts de la station mobile 1, comportant un serveur 4 de type connu, lui même comprenant, par exemple, un ordinateur 5 relié à une base de données 6.

Pour des raisons de clarté, certaines infrastructures nécessaires à l'émission ou à la réception de radiofréquences (stations de base, commutateurs mobiles ...) ne sont pas représentées sur la figure 1. Ces infrastructures comprennent notamment des moyens d'envoi à la station mobile 1, par l'intermédiaire des moyens de traitement, des données ou d'informations.

La base de données 6 regroupe, pour chacun des abonnés, différents critères prédéfinis et correspondant à son profil d'utilisation.

Ces critères, qui peuvent être définis par chaque abonné ou encore par l'opérateur du réseau d'origine, correspondent en particulier aux préférences de chacun des abonnés en terme, par exemple, de coût ou de disponibilité des services.

Ainsi, tel abonné peut souhaiter que, quelle que soit sa situation géographique, le coût de ses communications soit réduit au minimum tandis que tel autre abonné peut souhaiter disposer, à chaque instant, du service de transmission de données par paquet et ce quel que soit le coût en découlant.

La base de données 6 comporte au surplus les caractéristiques des différents réseaux de radiocommunications, et notamment leur zone de couverture, le coût des communications en itinérance, les différents services disponibles sur ledit réseau, etc.

De manière connue, la station mobile 1 est apte à émettre des signaux permettant dé la localiser, et ce quelle que soit sa situation géographique tant qu'un réseau de radiocommunications couvre la zone où la station mobile 1 se trouve.

Pour ce faire, la station mobile 1 envoie des informations de localisation qui peuvent, par exemple, comprendre l'indicatif du pays, l'indicatif du réseau auquel ladite station mobile 1 est connectée, ainsi qu'un code correspondant à la zone de localisation affectée par l'opérateur du réseau auquel la station mobile 1 est connectée.

Ainsi, le serveur 4 est apte à identifier de manière unique la zone géographique où se trouve la station mobile 1 et donc à localiser à chaque instant la station mobile 1.

Le procédé selon l'invention fonctionne de la manière suivante :
Initialement, la station mobile 1 est rattachée à son réseau d'origine, c'est-à-dire le réseau de l'opérateur auprès duquel l'utilisateur de la station mobile 1 a souscrit un abonnement, et connectée à un réseau d'accueil, différent du réseau d'origine.

Ce cas de figure se produit par exemple lorsque la station mobile 1 se trouve dans une zone non couverte par le réseau d'origine auquel elle est rattachée, mais couverte par le réseau d'accueil.

Par l'intermédiaire dudit réseau d'accueil, la station mobile 1 envoie au serveur 4 (flèche f1) les informations de localisation permettant audit serveur 4 d'identifier la position de la station mobile 1.

Cet envoi d'informations de localisation peut être effectué de manière évènementielle (à chaque changement de pays ou à chaque changement de zone de localisation ou encore à chaque mise en service de la station mobile 1) et / ou de manière régulière (selon une période de temps prédéfinie).

Le serveur 4, à l'aide de l'ordinateur 5, analyse ensuite les informations de localisation reçues de la station mobile 1 afin de déterminer tous les réseaux d'accueil répondant aux critères de préférence préalablement définis et recensés dans la base de données 6.

Le serveur 4 peut, par exemple, établir par ordre de priorité décroissante une liste des différents réseaux d'accueil répondant aux critères.

Cette liste de réseaux d'accueil peut comprendre à la fois des réseaux susceptibles d'offrir une couverture radio à la station mobile 1, mais également des réseaux ne couvrant que des zones voisines de celle où se trouve la dite station mobile 1.

En effet, dans le cas où la station mobile 1 se situe dans une région frontalière, il peut se révéler intéressant de connaître à la fois les réseaux couvrant la zone et ceux couvrant des zones environnantes.

Une fois cette liste de réseaux d'accueil déterminée, le serveur 4 adresse les résultats de son analyse à la station mobile 1 (flèche f2) à l'aide de moyens d'envoi.

Ces moyens d'envoi peuvent être constitués de moyens de transmission de type connu tels que le service de messages courts, une passerelle WAP (Wireless Application Protocol), ou tout moyen de transmission similaire.

Selon une première variante de réalisation, le procédé selon l'invention prévoit une étape de connexion automatique de la station mobile 1 au réseau d'accueil répondant le mieux aux critères prédéfinis. Cette étape de connexion automatique présente l'avantage d'être totalement transparente pour l'utilisateur qui, sans aucune manipulation de sa part, utilise sa station mobile 1 dans les conditions définies selon les critères.

Selon une seconde variante de réalisation, le serveur 4 envoie à la station mobile 1 la liste des réseaux d'accueil (liste qui peut ne contenir qu'un réseau d'accueil) répondant le mieux aux critères de l'abonné, ce dernier se chargeant de se connecter ou non manuellement au(x) réseau(x) d'accueil identifié(s) par le serveur 4 par l'intermédiaire d'un menu ad hoc de la station mobile 1.

Comme évoqué précédemment, le procédé selon l'invention s'applique également aux stations mobiles 1 équipées d'une carte SIM 3 comportant, de façon connue, différents abonnements associés chacun respectivement à un réseau de radiocommunications.

Ces différents réseaux constituent chacun un réseau d'origine auquel la station mobile 1 est apte à être rattachée. A l'inverse, les réseaux pour lesquels aucun abonnement n'a été souscrit restent des réseaux d'accueil.

Dans cette configuration, le serveur 4 se charge de déterminer, en fonction des critères prédéfinis et de la localisation de la station mobile 1, quel est le meilleur réseau d'origine auquel la station mobile 1 doit être rattachée.

Dans le cas où le réseau d'origine doit être modifié, la station mobile 1 doit être re-initialisée, soit automatiquement, soit par l'intermédiaire de l'utilisateur à qui le choix est laissé.

Pour cela, le procédé selon l'invention prévoit une étape d'envoi à la station mobile 1, par l'intermédiaire des moyens de traitement (serveur 4 par exemple), d'une seconde liste de réseaux, mais cette fois de réseaux d'origine préférentiels aptes à répondre au mieux aux critères prédéfinis.

Une fois les listes de réseaux d'origine et d'accueil reçues, l'utilisateur a la possibilité de modifier le réseau d'origine auquel la station mobile 1 est rattachée et le réseau d'accueil auquel ladite station mobile 1 est connectée.

Selon une forme particulière de réalisation, le serveur 4 est apte à modifier automatiquement, selon les critères prédéfinis, à la fois le réseau d'origine auquel la station mobile 1 est rattachée et le réseau d'accueil auquel ladite station mobile 1 est connectée.

Ainsi, selon les critères prédéfinis recensés dans la base de données 6 et selon la situation géographique de la station mobile 1, le serveur 4 permet d'optimiser le couple réseau d'origine - réseau d'accueil pour les différentes localisations de la station mobile 1.

Par exemple, la station mobile 1 d'un utilisateur français se trouvant en Allemagne et disposant d'abonnements français et anglais, peut être rattachée au réseau d'origine anglais si les tarifs en itinérance sont plus intéressants avec l'opérateur anglais à partir de l'Allemagne (cas d'un utilisateur dont la préférence va aux tarifs de connexion les plus bas).

Le procédé selon l'invention s'applique également lorsque la station mobile 1 se trouve dans une zone couverte par l'un des réseaux d'origine référencés sur la carte SIM 3. La station mobile 1 est ainsi normalement rattachée et connectée audit réseau d'origine.

Cependant, si le réseau d'origine n'offre pas un service souhaité par l'abonné, le serveur 4 identifie, par l'intermédiaire des informations de localisation envoyées par la station mobile 1, un réseau d'accueil offrant ledit service. L'abonné, à la vue de la liste reçue, est ensuite libre de se connecter au réseau d'accueil.

Le procédé selon l'invention permet ainsi d'optimiser les connexions d'une station mobile 1 à différents réseaux de radiocommunications en fonction de critères prédéfinis par l'utilisateur de la station mobile 1 ou un opérateur.

## Revendications

1. Procédé de connexion d'une station mobile (1) d'un utilisateur à un réseau de radiocommunications d'accueil, ladite station mobile (1) étant apte à être rattachée à au moins un réseau d'origine, comportant les étapes :
- d'envoi, par la station mobile (1) à des moyens de traitement (4), d'informations de localisation de la station mobile (1),
- de détermination par les moyens de traitement (4), en fonction des informations de localisation reçues et de critères prédéfinis, d'une liste de réseaux d'accueil préférentiels répondant aux dits critères prédéfinis,
- d'envoi à la station mobile (1), par les moyens de traitement (4), d'une liste de réseaux d'accueil préférentiels répondant aux dits critères prédéfinis,
**caractérisé en ce que**
- selon la liste de réseaux d'accueil préférentiels répondant aux dits critères prédéfinis, les moyens de traitement (4) envoient en outre à la station mobile (1), une liste de réseaux d'origine préférentiels, et
- le procédé prévoit une étape de rattachement automatique de la station mobile (1) à l'un des réseaux d'origine préférentiels.

2. Procédé selon la revendication 1, **caractérisé en ce que** la connexion de la station mobile (1) à l'un des réseaux de la liste de réseaux d'accueil préférentiels est automatique.

3. Procédé selon la revendication 1, **caractérisé en ce que** l'utilisateur choisit, parmi la liste de réseaux d'accueil préférentiels, le réseau auquel il souhaite connecter la station mobile.

4. Procédé selon l'une des revendications précédentes, **caractérisé en ce que** les dits critères prédéfinis sont de préférence tarifaires et/ou des préférences de disponibilités de services.

5. Procédé selon l'une des revendications précédentes, **caractérisé en ce que** les critères sont prédéfinis par l'utilisateur.

6. Procédé selon l'une des revendications précédentes, **caractérisé en ce que** les critères résident dans une zone mémoire des moyens de traitement (4).

7. Procédé selon l'une des revendications précédentes, **caractérisé en ce que** l'envoi d'informations de localisation par la station mobile (1) aux moyens de traitement (4) est opéré périodiquement.

8. Procédé selon l'une des revendications précédentes, **caractérisé en ce que** l'envoi d'informations de localisation par la station mobile (1) aux moyens de traitement (4) est opéré à chaque mise en service de la station mobile (1) et / ou à chaque changement de localisation de la dite station mobile (1).

9. Procédé selon l'une des revendications précédentes, **caractérisé en ce que** l'envoi d'informations de localisation par la station mobile (1) aux moyens de traitement (4) est opéré par l'utilisateur.

10. Procédé selon l'une des revendications précédentes, **caractérisé en ce que** les moyens de traitement (4) comprennent un ordinateur (5) relié à une base de données (6) comprenant les différents critères prédéfinis.

## Patentansprüche

1. Verfahren für den Anschluss einer beweglichen Station (1) eines Benutzers an ein Funkkommunikationsnetzwerk, wobei sich die bewegliche Station (1) dazu eignet, an mindestens ein Ursprungsnetzwerk angeschlossen zu werden, und umfassend die folgenden Schritte :
- Versand von Lokalisierungsdaten der beweglichen Station (1) über die bewegliche Station (1) an Verarbeitungsvorrichtungen (4),
- Festlegung, über die Verarbeitungsvorrichtungen (4) und unter Berücksichtigung der empfangenen Lokalisierungsinformationen und den vordefinierten Kriterien, einer Liste von bevorzugten Funkkommunikationsnetzwerken, die vordefinierten Kriterien entsprechen,
- Versand über die Verarbeitungsvorrichtungen (4) an die bewegliche Station (1) einer Liste von bevorzugten Funkkommunikationsnetzwerken, die den genannten, vordefinierten Kriterien entsprechen,
**dadurch gekennzeichnet, dass**
- die Verarbeitungsvorrichtungen (4) je nach Liste von bevorzugten Funkkommunikationsnetzwerken, die den genannten, vordefinierten Kriterien entsprechen, auch eine Liste der bevorzugten Ursprungsnetzwerke an die bewegliche Station (1) senden, und
- das Verfahren eine automatische Verbindung der beweglichen Station (1) an eines der bevorzugten Ursprungsnetzwerke umfasst.

2. Verfahren nach Anspruch 1, **dadurch gekennzeichnet, dass** der Anschluss der beweglichen Station (1) an eines der Netzwerke der Liste von bevorzugten Funkkommunikationsnetzwerken automatisch stattfindet.

3. Verfahren nach Anspruch 1, **dadurch gekennzeichnet, dass** der Benutzer aus der Liste der bevorzugten Funkkommunikationsnetzwerke das Netzwerk auswählt, an das er die bewegliche Station anschließen möchte.

4. Verfahren nach einem der vorausgehenden Ansprüche, **dadurch gekennzeichnet, dass** es sich bei den vorgenannten, vordefinierten Kriterien um Vorzüge im Hinblick auf die Gebühren und/oder die Verfügbarkeit der Dienste handelt.

5. Verfahren nach einem der vorausgehenden Ansprüche, **dadurch gekennzeichnet, dass** die Kriterien vom Benutzer vordefiniert sind.

6. Verfahren nach einem der vorausgehenden Ansprüche, **dadurch gekennzeichnet, dass** die Kriterien in einem Speicherbereich der Verarbeitungsvorrichtungen (4) aufgezeichnet sind.

7. Verfahren nach einem der vorausgehenden Ansprüche, **dadurch gekennzeichnet, dass** der Versand von Lokalisierungsinformationen von der beweglichen Station (1) an die Verarbeitungsvorrichtungen (4) in regelmäßigen Abständen stattfindet.

8. Verfahren nach einem der vorausgehenden Ansprüche, **dadurch gekennzeichnet, dass** der Versand von Lokalisierungsinformationen von der beweglichen Station (1) an die Verarbeitungsvorrichtungen (4) bei jedem Einschalten der beweglichen Station (1) und / oder bei jeder Änderung der Lokalisierung der vorgenannten beweglichen Station (1) stattfindet.

9. Verfahren nach einem der vorausgehenden Ansprüche, **dadurch gekennzeichnet, dass** der Versand von Lokalisierungsinformationen von der beweglichen Station (1) an die Verarbeitungsvorrichtungen (4) von dem Benutzer ausgeführt ist.

10. Verfahren nach einem der vorausgehenden Ansprüche, **dadurch gekennzeichnet, dass** die Verarbeitungsvorrichtungen (4) einen Computer (5) umfassen, der an eine Datenbank (6) angeschlossen ist, die die verschiedenen, vordefinierten Kriterien enthält.

## Claims

1. A method for connecting a user's mobile station (1) to a host radiocommunications network, wherein the said mobile station (1) can be attached to at least one source network, comprising the steps of:
- sending of information about the location of the mobile station (1) by the mobile station (1) to processing means (4),
- determination by the processing means (4), on the basis of the location information received and predefined criteria, of a list of preferential host networks that meet the said predefined criteria,
- sending by the processing means (4) of a list of preferential host networks that meet the said predefined criteria to the mobile station (1),
**characterised in that**
- on the basis of the list of preferential host networks that meet the said predefined criteria, the processing means (4) further send a list of preferential source networks to the mobile station (1), and
- the method provides for a step wherein the mobile station (1) is automatically attached to one of the preferential source networks.

2. A method according to claim 1, **characterised in that** the connection of the mobile station (1) to one of the networks in the list of preferential host networks is automatic.

3. A method according to claim 1, **characterised in that** the user selects the network to which he/she wants to connect the mobile station from the list of preferential host networks.

4. A method according to any of the preceding claims, **characterised in that** the said predefined criteria are preferentially price criteria and/or service availability criteria.

5. A method according to any of the preceding claims, **characterised in that** the criteria are predefined by the user.

6. A method according to any of the preceding claims, **characterised in that** the criteria reside in a memory zone of the processing means (4).

7. A method according to any of the preceding claims, **characterised in that** location information is sent by the mobile station (1) to the processing means (4) periodically.

8. A method according to any of the preceding claims, **characterised in that** location information is sent by the mobile station (1) to the processing means (4) every time the mobile station (1) is put into service and/or every time the location of the said mobile station changes.

9. A method according to any of the preceding claims, **characterised in that** the sending of location information by the mobile station (1) to the processing means (4) is carried out by the user.

10. A method according to any of the preceding claims, **characterised in that** the processing means (4) comprise a computer (5) connected to a database (6) comprising the different predefined criteria.
